# FASCICULE DE BREVET EUROPEEN

(11) **EP 1 783 575 B1**
(45) Date de publication et mention de la délivrance du brevet: **01.10.2008**
(21) Numéro de dépôt: 06291681.2
(22) Date de dépôt: 27.10.2006
(51) Int. Cl.: G05D 16/06

(54) **Dispositif détendeur pour la régulation automatique de la pression aval d'un fluide gazeux**
Druckminderungsvorrichtung zur automatischen Regulierung des Nachdrucks eines gasförmigen Fluids
Regulator device for the automatic regulation of the downstream pressure of a gaseous fluid

(30) Priorité: 04.11.2005 FR 0511258
(43) Date de publication de la demande: 09.05.2007
(73) Titulaire: Francel, 28320 Gallardon (FR)
(72) Inventeur: Berte, François, 28300 Leves (FR)
(74) Mandataire: Thinat, Michel

(56) Documents cités:
- EP-A- 0 188 024
- GB-A- 2 289 116
- US-B1- 6 176 256

## Description

La présente invention concerne un dispositif détendeur pour la régulation automatique de la pression aval d'un fluide gazeux.

Un tel dispositif est connu dans US 6,176,256 B1 et GB 2 289 116 A.

On connaît un tel dispositif détendeur dont le corps comprend deux étages en cascade respectivement de pré-détente et de détente interposées dans la voie d'écoulement du fluide gazeux traversant le dispositif. L'étage de pré-détente comprend une soupape montée entre l'entrée du détendeur et un espace interne et qui est commandée par une membrane de pré-détente délimitant deux chambres inférieure et supérieure respectivement de pression communiquant avec l'espace interne et d'échappement, la membrane de pré-détente étant chargée par un ressort de tarage situé dans la chambre d'échappement. L'étage de détente comprend une soupape de détente interposée entre l'espace interne et l'espace de sortie du détendeur et commandée par une membrane de détente délimitant deux chambres inférieure et supérieure respectivement de pression communiquant avec l'espace de sortie et d'échappement, la membrane de détente étant chargée par un ressort de tarage situé dans la chambre d'échappement.

Ce dispositif connu a pour inconvénient que la soupape de l'étage de pré-détente est commandée par la membrane de pré-détente par l'intermédiaire d'un levier pivotant compliquant la structure interne du dispositif détenteur. En outre, les différents composants internes de ce dispositif, notamment ceux de l'ensemble à soupape de détente et levier accouplé à la membrane de détente, doivent être montés séparément dans le corps du dispositif, ce qui augmente le temps de montage du dispositif et, par conséquent, les coûts de main d'oeuvre. Enfin, dans ce dispositif connu, la tubulure d'entrée et/ou la tubulure de sortie du fluide gazeux sont assemblées dans le corps du dispositif par vissage dans un orifice taraudé de ce corps. Un tel assemblage est coûteux à réaliser et est à éviter pour des raisons de fragilité de la matière malléable constituant le corps du détendeur généralement réalisé à base d'alliage de zinc et d'aluminium.

La présente invention a pour but d'éliminer les inconvénients ci-dessus des dispositifs connus en proposant un dispositif détendeur pour la régulation automatique de la pression aval d'un fluide gazeux, selon lequel le corps du détendeur comprend deux étages en cascade respectivement de pré-détente et de détente interposés dans la voie d'écoulement du fluide gazeux traversant le dispositif, l'étage de pré-détente comprenant une soupape montée entre l'entrée du détendeur et un espace interne et qui est commandée par une membrane de pré-détente délimitant deux chambres inférieure et supérieure respectivement de pression communiquant avec l'espace interne et d'échappement, la membrane de pré-détente étant chargée par ressort de tarage situé dans la chambre d'échappement, l'étage de détente comprenant une soupape de détente interposée entre l'espace interne et l'espace de sortie du détendeur et commandée par une membrane de détente délimitant deux chambres inférieure et supérieure respectivement de pression communiquant avec l'espace de sortie et d'échappement, la membrane de détente étant chargée par ressort de tarage situé dans la chambre d'échappement, et qui est caractérisé en ce que la soupape de pré-détente a sa tige directement accouplée, par son extrémité opposée au clapet de cette soupape, à la membrane de pré-détente perpendiculairement à cette dernière et son clapet, qui est réalisé en forme de manchon en matériau élastomère solidaire coaxialement de la tige à l'opposé de la membrane de pré-détente, monté à coulissement guidé de façon étanche dans un cylindre du corps du détendeur de manière que l'extrémité supérieure du manchon puisse venir en appui étanche sur son siège de soupape lors du fonctionnement du détendeur.

Avantageusement, le manchon du clapet de la soupape de pré-détente comprend au moins un bourrelet inférieur d'étanchéité en contact glissant dans le cylindre et un bourrelet supérieur d'extrémité du clapet pouvant venir en appui étanche sur le siège de soupape.

De préférence, le manchon du clapet comprend deux bourrelets inférieurs de diamètre sensiblement identique au diamètre du bourrelet supérieur.

La chambre du cylindre de guidage du clapet est en communication avec l'espace interne précité par des micro passages réalisés dans la paroi de fond du cylindre, la paroi de fond de ce cylindre étant avantageusement mince et poreuse.

La soupape de pré-détente comprend en outre un ressort à boudin de sécurité monté précontraint entre l'extrémité de la tige de soupape opposée à celle accouplée à la membrane de pré-détente et la paroi de fond du cylindre.

La soupape de détente a sa tige reliée à la membrane de détente par l'intermédiaire d'un levier monté pivotant sur une pièce de support solidaire du corps du détendeur et dans laquelle est montée à coulissement guidé la tige de soupape portant à son extrémité inférieure le clapet correspondant pouvant venir en appui sur un siège de sécurité de la pièce de support.

Avantageusement, le levier est monté articulé à l'extrémité supérieure de la tige de soupape et pivotant à la pièce de support dans une chape de cette pièce.

La pièce de support est en une matière rigide intégralement moulée, telle qu'une matière plastique ou du zamak (alliage de zinc et d'aluminium).

Les deux membranes de pré-détente et de détente sont disposées adjacentes l'une de l'autre sensiblement dans un même plan et sont fixées en étant prises chacune en sandwich à leur pourtour entre une cuvette et un couvercle amoviblement fixé sur la cuvette pour délimiter les chambres de pression et d'échappement, les deux couvercles étant réalisés en une seule pièce et un conduit commun d'évent, solidaire des deux couvercles entre ceux-ci, communiquant avec les deux chambres d'échappement au travers respectivement de deux orifices des couvercles.

Le couvercle de l'étage de détente dans lequel est logé le ressort de tarage correspondant est fermé par un bouchon fileté de réglage de tarage du ressort et vissé dans un taraudage venant de moulage d'une jupe cylindrique du couvercle.

Le taraudage de la jupe du couvercle est constitué par un filet en hélice unique.

Au moins l'une des membranes, notamment la membrane de pré-détente, comprend un plateau en une matière rigide, telle qu'une matière plastique ou du zamak, surmoulé dans la membrane.

Le plateau rigide est accouplé à l'extrémité supérieure de la tige de la soupape de pré-détente.

L'entrée du détendeur comprend une tubulure de raccordement à une source de pression élevée fixée dans un perçage d'entrée du corps du détendeur par une bague anti-traction tronconique logée dans une gorge externe de la tubulure et dont le bord circulaire de plus grand diamètre est dirigé vers l'entrée du fluide gazeux dans la tubulure pour empêcher l'extraction de cette dernière hors de l'orifice en pénétrant dans la matière malléable du corps du détendeur.

L'étage de détente comprend une soupape d'écrêtage logée dans la chambre de pression et comprenant un organe obturateur annulaire à section en forme de lèvre d'étanchéité travaillant en flexion solidaire de la membrane de détente au niveau de son ouverture centrale circulaire et un siège d'étanchéité formé par une collerette de la partie inférieure de la tige de soupape reliée à la soupape de détente, l'organe obturateur étant maintenu en appui sur le siège d'étanchéité par au moins le ressort de tarage correspondant.

L'invention sera mieux comprise, et d'autre buts, caractéristiques, détails et avantages de celle-ci apparaîtront plus clairement dans la description explicative qui va suivre faite en référence aux dessins donnés uniquement à titre d'exemple illustrant plusieurs modes de réalisation de l'invention et dans lesquels :
- la figure 1 est une vue de dessus du dispositif détendeur conforme à l'invention ;
- la figure 2 est une vue en coupe suivant la ligne II-II de la figure 1 ;
- la figure 3 est une vue en section suivant la ligne III-III de la figure 1 ;
- la figure 4 est une vue en section et en perspective dans le plan contenant la ligne II-II de la figure 1 ;
- la figure 5 est une vue en section transversale de l'étage de pré-détente du dispositif de l'invention ;

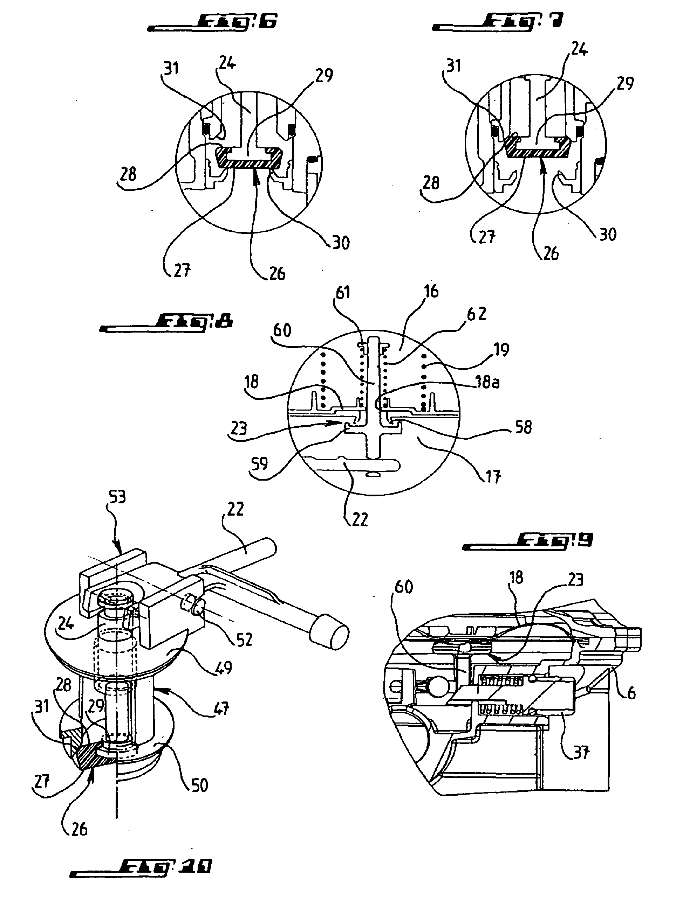

- la figure 6 et la figure 7 représentent le clapet de la soupape de détente en positions respectivement de fermeture et de sécurité ;
- la figure 8 représente la soupape de sécurité de l'étage détendeur du dispositif en position d'ouverture lorsque la pression de sortie dépasse une valeur de pression déterminée ;
- la figure 9 est une vue en section suivant la ligne IX-IX de la figure 1 et représentant des moyens d'armement du dispositif détendeur de l'invention ; et
- la figure 10 est une vue en perspective d'un ensemble unitaire à levier, tige et siège de sécurité d'une soupape de détente.

En se reportant aux figures, le dispositif détendeur comprend un corps d'enveloppe étanche 1 traversé par une voie d'écoulement de fluide gazeux. A l'une des extrémités du corps 1 est fixée une tubulure de raccordement 2 pouvant être raccordée à une source de pression élevée (non représentée) par l'intermédiaire d'un écrou de raccordement 3 fixé de façon imperdable à la tubulure 2 d'entrée de fluide gazeux.

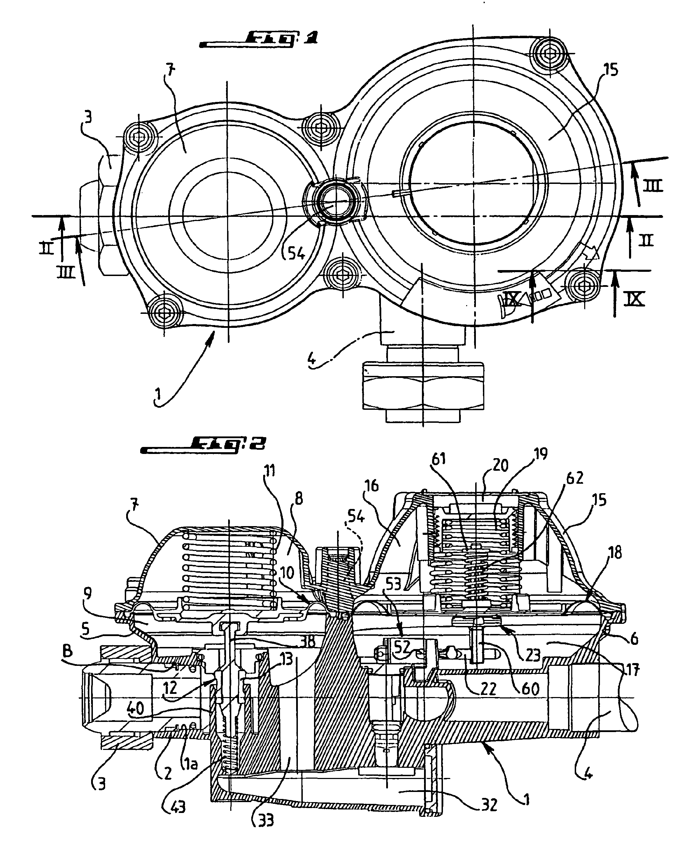

L'extrémité opposée du corps 1 est raccordée à une tubulure de sortie du gaz détendu 4 reliée à un appareil d'utilisation. Cette tubulure peut être celle en prolongement de la tubulure 2 comme représenté en figure 2 ou celle située à angle droit de la tubulure 2 comme représenté en figure 1, l'une ou l'autre de ces tubulures 4 devant être fermée par un bouchon de fermeture.

Le corps 1 comporte en partie supérieure deux cuvettes 5,6. La cuvette 5 est fermée par un couvercle 7 amoviblement fixé à cette cuvette de manière à délimiter deux chambres 8, 9 respectivement d'échappement et de pression par une membrane étanche et souple de pré-détente 10. La membrane 10 est fixée par son pourtour circulaire dans le plan de jonction de la cuvette 5 et du couvercle 7 et est chargée par un ressort de tarage 11 logé dans l'espace d'échappement 8 et repoussant la membrane 10 vers la chambre 9.

Une soupape d'entrée de pré-détente 12 est disposée dans le corps 1 en aval de la tubulure d'entrée 2 en communication du fluide avec celle-ci. La soupape 12 comprend un organe formant un clapet 13 et un siège de soupape 14 solidaire du corps 1 et contre lequel peut venir en appui étanche le clapet 13 de la soupape 12.

L'autre cuvette 6 du corps 1 est recouverte par un couvercle 15 qui est amoviblement fixé à la cuvette 6. Le couvercle 15 et la cuvette 6 délimitent deux chambres 16, 17 respectivement d'échappement et de régulation par une membrane étanche et souple de détente 18 fixée par son pourtour circulaire dans le plan de jonction du couvercle 15 et de la cuvette 6. La membrane 18 est chargée par un ressort de tarage 19 logé dans la chambre d'échappement 16 de manière à être repoussée vers la chambre de régulation 17. L'extrémité supérieure du ressort 19 est en appui contre un bouchon de fermeture 20 du couvercle 15 et amoviblement vissé dans ce dernier.

La membrane 18 commande une soupape de détente 21 par l'intermédiaire d'un levier pivotant 22 dont une extrémité est reliée à la membrane 18 par l'intermédiaire d'une soupape d'écrêtage 23 et l'extrémité opposée est reliée articulée à l'extrémité supérieure de la tige de commande 24 de la soupape 21. La soupape de détente 21 est montée mobile à coulissement guidé par sa tige 24 dans une pièce tubulaire ou manchon de guidage 25 solidaire du corps 1. Le clapet mobile 26 de la soupape 21 opposé à l'extrémité de la tige 24 reliée au levier 22 comprend deux faces d'obturation 27, 28 axialement espacées l'une de l'autre d'une tête 29 du clapet. Le clapet 26 peut être constitué par une garniture d'étanchéité rapportée à la tête 29. Les faces d'obturation 27, 28 peuvent coopérer respectivement avec deux sièges d'étanchéité 30, 31 solidaires du corps 1 en étant axialement espacés de part et d'autre du clapet 26 pour occuper une position de fermeture à débit aval nul lorsqu'en appui sur le siège d'étanchéité 30 et une position de sécurité en appui sur le siège d'étanchéité 31 pour couper le débit du fluide gazeux dans le cas du débit trop élevé en aval ou de pression aval trop faible.

Une chambre 32 est délimitée à l'intérieur du corps 1 entre la soupape de pré-détente 12 et la soupape de détente 21, la chambre 32 communiquant avec la chambre de pression 9 de l'étage de pré-détente par l'intermédiaire d'un canal 33 du corps 1. En outre, un espace ou une chambre 34 est formé en aval de la soupape de détente 21 en communication de fluide avec la tubulure de sortie 4, l'espace 34 communiquant avec la chambre de régulation 17 de l'étage détendeur par l'intermédiaire d'un orifice 35 réalisé au travers d'une paroi de séparation 36 du corps 1.

Le dispositif détendeur comprend également un mécanisme manuel à bouton d'armement 37 pouvant être enfoncé pour la mise ne service du détendeur, comme cela est connu en soi.

Selon l'invention, la soupape de pré-détente 12 a sa tige 38 qui est directement accouplée à son extrémité supérieure à la membrane de pré-détente 10 au centre de cette dernière, la tige 38 s'étendant perpendiculairement en dessous de cette membrane. En outre, le clapet 13 de la soupape de pré-détente est réalisé en forme de manchon en matériau élastomère solidaire coaxialement de la tige 38 sur une portion de plus grand diamètre 39 prolongeant la tige 38 à l'opposé de la membrane 10. Le clapet 13 est monté à coulissement guidé de façon étanche dans un cylindre 40 du corps 1 de manière qu'en position de fermeture de la soupape 12, l'extrémité supérieure du manchon du clapet 13 soit en appui étanche sur son siège de soupape 14.

Le manchon du clapet 13 de la soupape 12 comprend deux bourrelets inférieurs d'étanchéité 41 espacés axialement le long du manchon et en contact glissant dans le cylindre 40 et un bourrelet d'extrémité supérieur 42 d'un diamètre sensiblement égal au diamètre de chacun des deux bourrelets inférieurs 41.

La soupape de pré-détente 12 comprend un ressort à boudin 43 logé dans la chambre 44 du cylindre 40 en étant monté précontraint entre la paroi de fond 45 de la chambre 44 et l'extrémité inférieure 46 de la tige de soupape 38 prolongeant sa partie du plus grand diamètre 39. L'extrémité supérieure du ressort 43 est montée coaxialement autour de l'extrémité inférieure 46 de la soupape de pré-détente 12.

La chambre 44 du cylindre 40 dans laquelle peut coulisser le manchon du clapet 13 est en communication de fluide avec la chambre 32 par l'intermédiaire des micro passages réalisés au travers de la paroi de fond 45 de cette chambre. De préférence, la paroi de fond 45 est relativement mince et poreuse pour assurer la communication entre les chambres 44 et 32.

Le levier 22, la tige 24 et le clapet 26 de la soupape de détente 21 ainsi que le siège de sécurité 31 forment un ensemble de construction rendu unitaire par une pièce de support 47 de forme générale cylindrique en une matière rigide, telle qu'une matière plastique ou du zamak, logée dans un puits 48 du corps 1 s'étendant perpendiculairement au plan horizontal de la membrane de détente 18. Plus précisément, la pièce de support 47 comporte une paroi circulaire supérieure 49 pouvant être fixée sur le bord supérieur du puits 48 et une plaque inférieure circulaire 50 en appui étanche dans le puits 48 et solidarisée parallèlement à la plaque supérieure 49 par deux montants rigides parallèles 51 et diamétralement opposés. La plaque supérieure 49 est prolongée en son centre vers la plaque inférieure 50 par le manchon constituant le moyen de guidage 25 de la tige 24 de la soupape de détente 21.

Le levier 22 est monté pivotant au-dessus de la plaque supérieure 49 de la pièce de support 47 par un axe 52 monté dans une chape 53 venant de moulage avec la plaque 49.

Ainsi, la pièce du support 47, le levier pivotant 22, la tige 24, le clapet 26 de la soupape de détente et le siège de sécurité 31 forment un ensemble unitaire pouvant être monté directement dans le puits 48. Cet ensemble unitaire a en outre pour avantage d'être aisément stocké avant montage sans perte de pièces le constituant.

Comme cela ressort mieux de la figure 2, les deux membranes 10, 18 sont disposées adjacentes l'une de l'autre sensiblement dans un même plan et les deux couvercles 7, 15 sont réalisés en une seule pièce par moulage avec un conduit commun d'évent 54 de mise à l'atmosphère des deux chambres d'échappement 8, 16, le conduit 54 communiquant avec ces deux chambres au travers respectivement de deux orifices 55 réalisés dans les couvercles 7, 15.

Le bouchon fileté 20 de réglage du ressort de tarage 19 est vissé dans un taraudage à filet en hélice unique 56 venant de moulage d'une jupe cylindrique 57 du couvercle 15. En prévoyant ainsi un seul filet en hélice de vissage du bouchon de réglage 20, on évite l'usinage d'un trou taraudé dans la matière malléable du corps 1 du détendeur généralement réalisé à base d'un alliage de zinc et d'aluminium.

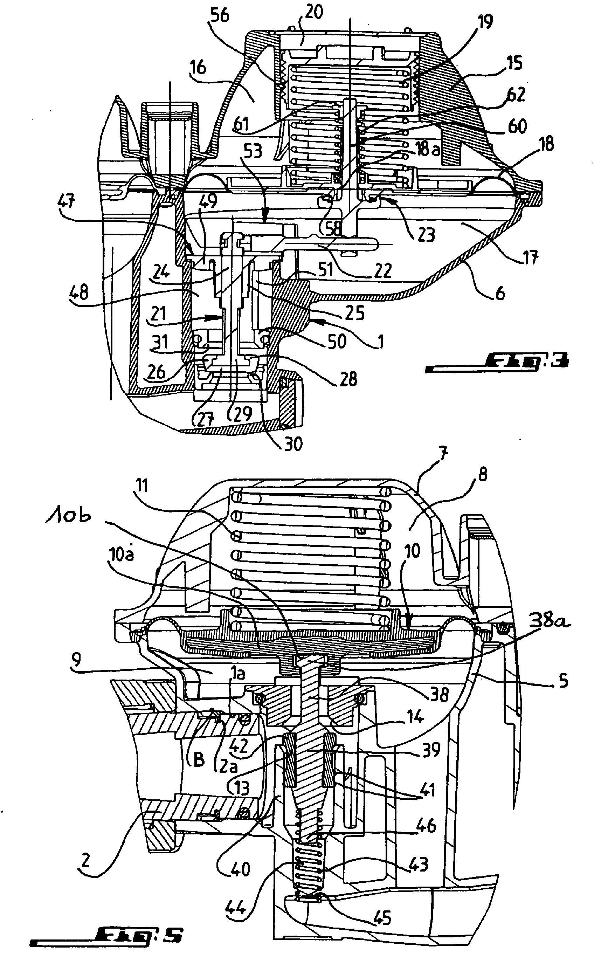

Comme mieux visible en figure 5, la membrane de pré-détente 10 comprend un plateau central rigide en matière plastique ou en zamak 10a qui est surmoulé dans la membrane 10. Le plateau 10a non seulement a pour fonction d'assurer la rigidité de la partie soumise à la pression, mais également d'assurer la liaison de la membrane 10 à l'extrémité supérieure de la tige 38 de la soupape de pré-détente 12a cet effet, l'extrémité supérieure de la tige 38 de la soupape 12 comporte un collet 38a en forme de pastille circulaire encastré ou ancré dans un évidement conjugué central 10b du plateau rigide 10a. Le cas échéant, la membrane 18 de détente peut également être pourvue d'un plateau identique au plateau 10a et surmoulé dans la membrane 18.

La tubulure d'entrée 2 est fixée dans l'orifice d'entrée correspondant 1a du corps 1 par une bague anti-traction B de forme générale tronconique logée dans une gorge externe 2a de la tubulure 2, le bord circulaire de plus grand diamètre de la bague B étant dirigé vers l'écrou imperméable 13 ou vers l'entrée du fluide gazeux de la tubulure 2 de manière à empêcher l'extraction de cette dernière hors de l'orifice la par pénétration du bord circulaire dans la matière malléable du corps 1. La tubulure de sortie 4 peut également être pourvue d'une telle bague empêchant son extraction par traction du corps 1.

La soupape d'écrêtage 23, qui est logée dans la chambre de régulation 17 de l'étage détendeur, comprend un organe obturateur annulaire 58 à une section en forme de lèvre d'étanchéité travaillant en flexion en direction parallèle à l'axe longitudinal du ressort de tarage 19 et qui est solidaire de la membrane de détente 18 au niveau d'une ouverture centrale circulaire 18a de cette dernière. La soupape d'écrêtage 23 comprend en outre un siège d'étanchéité 59 formé par une collerette de la partie inférieure de la tige 60 de la soupape d'écrêtage 23 reliée de manière articulée à l'extrémité libre du levier 22 de la soupape de détente 21. La lèvre 58 formant clapet est maintenue en appui sur le siège d'étanchéité 59 par le ressort de tarage 19. La tige 60 de la soupape d'écrêtage 23 traverse l'ouverture centrale 18a de la membrane 18 en faisant saillie dans la chambre d'échappement 16. Une coupelle 61 formant butée est solidaire de l'extrémité libre de la tige 60 et un ressort à boudin 62 est monté précontraint entre la coupelle 61 et le bord circulaire délimitant l'orifice central 18a de la membrane de détente 18. Le ressort 62 a un diamètre beaucoup plus petit que le ressort de tarage 19 est logé concentriquement dans ce dernier.

Le fonctionnement du détenteur va être maintenant décrit ci-dessous.

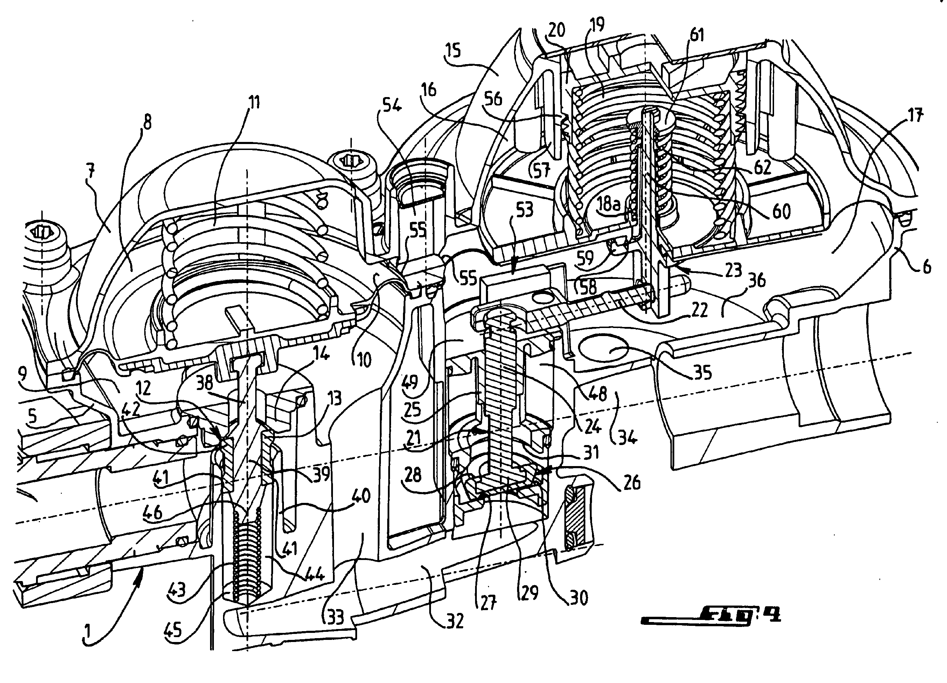

Le gaz sous pression arrive dans la tubulure d'entrée 2 et traverse la soupape de pré-détente 12 occupant sa position d'ouverture représentée en figure 5 pour parvenir dans la chambre de pré-détente 32 et dans la chambre de pression 9 de l'étage prédétendeur pour y exercer une pression sur la membrane 10 qui se soulève. Ce soulèvement de la membrane 10 provoque la fermeture de la soupape de pré-détente 12 par coulissement guidé du manchon clapet 13 dans le cylindre 40. La soupape de détente 21 occupe pour l'instant sa position d'obturation du siège 30 par la garniture d'étanchéité 27 comme cela est représenté aux figures 3 et 4.

En actionnant le bouton poussoir d'armement 37, on provoque le pivotement du levier 22 dans un sens entraînant un soulèvement très léger de la garniture ou face d'obturation 28 de son siège 31, de sorte que le gaz se trouvant dans la chambre 32 traverse la soupape de détente 21 et s'engage dans la chambre de pression 17 dans laquelle il exerce une pression sur la membrane de détente 18 pour faire pivoter le levier 22 dans le sens appliquant la garniture 27 sur son siège 30 pour fermer la soupape de détente 21. Le détendeur est alors en service.

Lors d'un appel de débit, la pression dans l'espace 34 et la chambre de régulation 17 s'abaisse et la membrane de détente 18 s'affaisse pour provoquer le basculement du levier pivotant 22 et soulever la garniture 27 du clapet 26 de son siège 30 de sorte que le passage à travers la soupape de détente 21 est ouvert jusqu'à ce que le débit demandé soit assuré. La pression diminue également dans la chambre 32 et, par conséquent dans la chambre de pression 9, affaissant la membrane 10 qui entraîne l'ouverture de la soupape de pré-détente 12.

Ainsi, l'étage de pré-détente permet d'alimenter le deuxième étage de détente avec une pression constante. Le manchon-clapet 13 est soumis à la pression détendue à ses deux extrémités et les micro-passages de la paroi 45 de la chambre 44 du cylindre 40 assurent l'équilibrage de pression dans la chambre 44. L'étage de détente ne subit donc pas de variation de pression due aux efforts que pourrait générer la pression amont dans le clapet. Les micro-passages aussi réduits que possible de la paroi de fond 45 permettent de limiter le débit en cas de défaillance du manchon clapet 13 et permettent à la chambre 44 d'amortir les éventuelles vibrations ou pompages courants dans ce type de détendeur.

Le ressort 43 associé à la soupape de pré-détente 12 sert de sécurité en cas de rupture de l'accouplement de la tige de soupape 38 à la membrane 10 et assure alors le maintien en position de fermeture du manchon-clapet 13 sur son siège 14.

En cas de débit trop élevé ou de pression trop faible dans la chambre de régulation 17 de l'étage détendeur, l'affaissement de la membrane 18 provoque le basculement du levier pivotant 22 dans le sens amenant la face d'obturation 28 du clapet 26 en appui sur le siège de sécurité 31 pour fermer ainsi la soupape de détente 21. Le détendeur ne pourra être remis en service qu'après avoir remédié à ce défaut.

En cas de pression trop élevée dans la chambre 17 supérieure à la valeur de tarage du ressort 19, le soulèvement de la membrane 18 décolle le clapet d'étanchéité 58 de son siège 59 pour assurer le passage du gaz sous pression dans la chambre d'échappement à l'atmosphère 16.

## Revendications

1. Dispositif détendeur pour la régulation automatique de la pression aval d'un fluide gazeux, selon lequel le corps (1) du détendeur comprend deux étages en cascade respectivement de prédétente et de détente interposés dans la voie d'écoulement du fluide gazeux traversant le dispositif; l'étage de prédétente comprenant une soupape (12) montée entre l'entrée du détendeur et un espace interne (32), et qui est commandée par une membrane de prédétente (10) délimitant deux chambres inférieure (9) et supérieure (8), respectivement de pression communiquant avec l'espace interne (32) et d'échappement, la membrane de prédétente (10) étant chargée par un ressort de tarage (11) situé dans la chambre d'échappement (8); l'étage de détente comprenant une soupape de détente (21) interposée entre l'espace interne (32) et l'espace de sortie (34) du détendeur, et commandée par une membrane de détente (18) délimitant deux chambres inférieure (17) et supérieure (16), respectivement de régulation communiquant avec l'espace de sortie (34) et d'échappement, la membrane de détente (18) étant chargée par un ressort de tarage (19) situé dans la chambre d'échappement (16), **caractérisé en ce que** la soupape de prédétente (12) a sa tige (38) directement accouplée, par son extrémité (38a) opposée au clapet (13) de cette soupape (12), à la membrane de prédétente (10) perpendiculairement à cette dernière; et son clapet (13), qui est réalisé en forme de manchon en matériau élastomère solidaire coaxialement de la tige (38) à l'opposé de la membrane de prédétente (10), monté à coulissement guidé de façon étanche dans un cylindre (40) du corps (1) du détendeur de manière que l'extrémité supérieure (42) du manchon du clapet (13) puisse venir en appui étanche sur son siège de soupape (14) lors du fonctionnement du détendeur.

2. Dispositif selon la revendication 1, **caractérisé en ce que** l'extrémité de la tige (38) comprend un collet (38a) ancré dans un évidement conjugué (10b) la membrane de prédétente (10).

3. Dispositif selon la revendication 1 ou 2, **caractérisé en ce que** le manchon (13) du clapet de la soupape de prédétente (12) comprend au moins un bourrelet inférieur d'étanchéité (41) en contact glissant dans le cylindre (40) et un bourrelet supérieur d'extrémité (42) du clapet pouvant venir en appui étanche sur le siège de soupape (14).

4. Dispositif selon la revendication 3, **caractérisé en ce que** le manchon (13) du clapet comprend deux bourrelets inférieurs (41) de diamètre sensiblement identique au diamètre du bourrelet supérieur (42).

5. Dispositif selon l'une des revendications précédentes, **caractérisé en ce que** la chambre (44) du cylindre de guidage (40) du clapet est en communication avec l'espace interne précité (32) par des micro-passages réalisés dans la paroi de fond (45) du cylindre (40).

6. Dispositif selon la revendication 5, **caractérisé en ce que** la paroi de fond (45) du cylindre (40) est mince et poreuse.

7. Dispositif selon l'une des revendications précédentes, **caractérisé en ce que** la soupape de prédétente (12) comprend un ressort à boudin de sécurité (43) monté précontraint entre l'extrémité de la tige de soupape (38) opposée à celle accouplée à la membrane de prédétente (10) et la paroi de fond (45) du cylindre (40).

8. Dispositif selon l'une des revendications précédentes, **caractérisé en ce que** la soupape de détente (21) a sa tige (24) reliée à la membrane de détente (18) par l'intermédiaire d'un levier (22) monté pivotant sur une pièce de support (47) solidaire du corps (1) du détendeur et dans laquelle est montée à coulissement guidé la tige de soupape (24) portant à son extrémité inférieure le clapet correspondant (26) pouvant venir en appui sur un siège de sécurité (31) de la pièce de support (47).

9. Dispositif selon la revendication 8, **caractérisé en ce que** le levier (22) est monté articulé à l'extrémité supérieure de la tige de soupape (24) et pivotant à la pièce de support (47) dans une chape (53) de cette pièce.

10. Dispositif selon la revendication 8 ou 9, **caractérisé en ce que** la pièce de support (47) est en une matière rigide intégralement moulée, telle qu'une matière plastique ou du zamak.

11. Dispositif selon l'une des revendications précédentes, **caractérisé en ce que** les deux membranes (10,18) sont disposées adjacentes l'une de l'autre sensiblement dans un même plan et sont fixées en étant prises chacune en sandwich à leur pourtour entre une cuvette (5,6) et un couvercle (7,15) amoviblement fixé sur la cuvette pour délimiter les chambres de pression/régulation (9/17) et d'échappement (8,16), les deux couvercles (7,15) étant réalisés en une seule pièce et un conduit commun d'évent (54), solidaire des deux couvercles (7,15) entre ceux-ci, communiquant avec les deux chambres d'échappement (8,16) au travers respectivement de deux orifices (55) des couvercles.

12. Dispositif selon la revendication 11, **caractérisé en ce que** le couvercle (15) de l'étage de détente dans lequel est logé le ressort de tarage (19) est fermé par un bouchon fileté (20) de réglage de la force de tarage du ressort (19) vissé dans un taraudage (56) venant de moulage d'une jupe cylindrique (57) du couvercle.

13. Dispositif selon la revendication 12, **caractérisé en ce que** le taraudage (56) de la jupe du couvercle (57) est constitué par un filet en hélice unique.

14. Dispositif selon l'une des revendications précédentes, **caractérisé en ce qu'**au moins l'une des membranes, notamment la membrane de prédétente (10), comprend un plateau rigide en matière plastique ou en zamak (10a) surmoulé dans la membrane (10).

15. Dispositif selon la revendication 14, **caractérisé en ce que** le plateau rigide (10a) est accouplé à l'extrémité supérieure de la tige (38) de la soupape de prédétente (12).

16. Dispositif selon l'une des revendications précédentes, **caractérisé en ce que** l'entrée du détendeur comprend une tubulure (2) de raccordement à une source de pression élevée fixée dans un perçage d'entrée (1a) du corps du détenteur par une bague anti-traction tronconique (B) logée dans une gorge externe (2a) de la tubulure et dont le bord circulaire de plus grand diamètre est dirigé vers l'entrée du fluide gazeux dans la tubulure (2) pour empêcher l'extraction de cette dernière hors de l'orifice (2a) en pénétrant dans la matière malléable du corps du détendeur (1).

17. Dispositif selon l'une des revendications précédentes, **caractérisé en ce que** l'étage de détente comprend une soupape d'écrêtage (23) logée dans la chambre de régulation (17) et comprenant un organe obturateur annulaire à section en forme de lèvre d'étanchéité (58) travaillant en flexion solidaire de la membrane de détente (18) au niveau de son ouverture centrale circulaire (18a) et un siège d'étanchéité (59) formé par une collerette de la partie inférieure de la tige de soupape (60) reliée à la soupape de détente (21), l'organe obturateur (58) étant maintenu en appui sur le siège d'étanchéité (59) par au moins le ressort de tarage correspondant (19).

## Claims

1. A regulator device for automatic regulation of the downstream pressure of a gaseous fluid, wherein the body (1) of the regulator comprises two cascaded stages, respectively a pre-expansion and a pressure relief stage, interposed in the flow passage of the gaseous fluid going through the device; the pre-expansion stage comprising a valve (12) mounted between the inlet of the regulator and an inner space (32), and which is controlled by a pre-expansion membrane (10) defining two chambers, a lower one (9) and an upper one (8), respectively a pressure chamber communicating with the inner space and an exhaust chamber, the pre-expansion membrane (10) being charged by a calibrating spring (11) situated in the exhaust chamber (8); the pressure relief stage comprising a pressure relief valve (21) interposed between the inner space (32) and the outlet space (34) of the regulator, and being controlled by a pressure relief membrane (18) defining two chambers, a lower one (17) and an upper one (16), respectively a regulation chamber communicating with the outlet space (34) and an exhaust chamber, the pressure relief membrane (18) being charged by a calibrating spring (19) situated in the exhaust chamber (16), **characterized in that** the pre-expansion valve (12) has the stem (38) thereof directly coupled, by the end (38a) thereof opposite the flap (13) of this valve (12), with the pre-expansion membrane (10), perpendicularly to the latter; and the flap (13) thereof, which is embodied as a sleeve of elastomer material coaxially integral with the stem (38) at the opposite of the pre-expansion valve (10), slidingly mounted while being sealingly guided in a cylinder (40) of the body (1) of the regulator, whereby the upper end (42) of the sleeve (13) of the flap can sealingly bear on the valve seat (14) thereof during operation of the regulator.

2. The device according to claim 1, **characterized in that** the end of the stem (38) comprises a collar (38a) secured in the conjugate cutout (10b) of the pre-expansion valve (10).

3. The device according to claim 1 or 2, **characterized in that** the sleeve (13) of the flap of the pre-expansion valve (12) comprises at least one lower sealing bead (41) in gliding contact in the cylinder (40) and an upper end bead (42) of the flap capable of sealingly bearing on the valve seat (14).

4. The device according to claim 3, **characterized in that** the sleeve (13) of the flap comprises two lower beads (41) substantially identical in diameter to the diameter of the upper bead (42).

5. The device according to any of the preceding claims, **characterized in that** the chamber (44) of the guiding cylinder (40) of the flap communicates with said inner space (32) through micropassages made in the bottom wall (45) of the cylinder (40).

6. The device according to claim 5, **characterized in that** the bottom wall (45) of the cylinder (40) is thin and porous.

7. The device according to any of the preceding claims, **characterized in that** the pre-expansion valve (12) comprises a prestressed safety flange spring (43) mounted between the end of the valve stem (38) opposite the one coupled with the pre-expansion membrane (10) and the bottom wall (45) of the cylinder (40).

8. The device according to any of the preceding claims, **characterized in that** the pressure relief valve (21) has the stem (24) thereof linked to the pressure relief membrane (18) via a lever (22) pivotingly mounted on a supporting part (47) integral with the body (1) of the regulator, and wherein the valve stem (24) is mounted while being slidingly guided, carrying at the lower end thereof corresponding flap (26) capable of bearing on the safety seat (31) of the supporting part (47).

9. The device according to claim 8, **characterized in that** the lever (22) is mounted to be articulated at the upper end of the valve stem (24) and pivoting at the supporting part (47) in a fork (53) of this part.

10. The device according to claim 8 or 9, **characterized in that** the supporting part (47) is made of a rigid material which is integrally molded, such as a plastic material or Zamak.

11. The device according to any of the preceding claims, **characterized in that** both membranes (10, 18) are disposed adjacently to each other, substantially in a same plane, and are fixed by being each sandwiched at the periphery thereof between a retainer (5, 6) and a cover (7, 15) removably fixed to the retainer for defining the pressure/regulation (9/17) and exhaust (8, 16) chambers, both covers (7, 15) being made as one part, and a common venting duct (54), integral with both covers (7, 15) between them, communicating with the two exhaust chambers (8, 16) through respectively two ports (55) of the covers.

12. The device according to claim 11, **characterized in that** the cover (15) of the pressure relief stage housing the calibrating spring (19) is closed by a threaded cap (20) for setting the calibrating force of the spring (19) screwed into an internal thread (56) molded with a cylindrical skirt (57) of the cover.

13. The device according to claim 12, **characterized in that** the internal thread (56) of the skirt of the cover (57) is composed of a single helical thread.

14. The device according to any of the preceding claims, **characterized in that** at least one of the membranes, in particular the pre-expansion membrane (10), comprises a rigid plate of plastic material or Zamak (10a) overmolded into the membrane (10).

15. The device according to claim 14, **characterized in that** the rigid plate (10a) is coupled at the upper end of the stem (38) of the pre-expansion valve (12).

16. The device according to any of the preceding claims, **characterized in that** the inlet of the regulator comprises a tubing (2) for connecting to a high pressure source fixed in an inlet bore (1a) of the body of the regulator by a tapered strain relief bushing (B) housed in an external groove (2a) of the tubing, and the larger diameter circular rim of which is directed towards the entry of the gaseous fluid into the tubing (2) in order to prevent the latter from being extracted out of the port (2a) by penetrating into the deformable material of the body of the regulator (1).

17. The device according to any of the preceding claims, **characterized in that** the pressure relief stage comprises a peak shaving valve (23) housed in the regulation chamber (17) and comprising an annular closing member having a cross-section shaped as a sealing lip (58) having a bending effect, integral with the pressure relief membrane (18) at the circular center opening (18a) thereof and a sealing seat (59) formed by a collar of the lower portion of the valve stem (60) linked to the pressure relief valve (21), the closing member (58) being maintained bearing on the sealing seat (50) at least by the corresponding calibrating spring (19).

## Patentansprüche

1. Druckminderungsvorrichtung zur automatischen Regulierung des Nachdrucks eines gasförmigen Fluids, wobei der Körper (1) des Druckminderers zwei kaskadengeschaltete Stufen umfasst, jeweils eine Vordruckminderungs- und eine Druckminderungsstufe, die auf dem Durchflussweg des gasförmigen Fluids, das die Vorrichtung durchquert, zwischengeschaltet sind; wobei die Vordruckminderungsstufe ein Ventil (12) umfasst, das zwischen dem Eingang des Druckminderers und einem Innenraum (32) angebracht ist und das von einer Vordruckminderungsmembran (10) gesteuert wird, die zwei Kammern abgrenzt, eine untere (9) und eine obere (8), jeweils eine Druckkammer, die mit dem Innenraum in Verbindung steht, und eine Ausströmkammer, wobei die Vordruckminderungsmembran (10) von einer Kalibrierfeder (11), die sich in der Ausströmkammer (8) befindet, belastet wird; wobei die Druckminderungsstufe ein Druckminderungsventil (21) umfasst, das zwischen dem Innenraum (32) und dem Ausgangsraum (34) des Druckminderers zwischengeschaltet ist und von einer Druckminderungsmembran (18) gesteuert wird, die zwei Kammern abgrenzt, ein untere (17) und eine obere (16), jeweils eine Regulierungskammer, die mit dem Ausgangsraum (34) in Verbindung steht, und eine Ausströmkammer, wobei die Druckminderungsmembran (18) von einer Kalibrierfeder (19) belastet wird, die sich in der Ausströmkammer (16) befindet, **dadurch gekennzeichnet, dass** die Spindel (38) des Vordruckminderungsventils (12) mit ihrem Ende (38a), das der Klappe (13) dieses Ventils (12) gegenüberliegt, direkt mit der Vordruckminderungsmembran (10) gekoppelt ist, und zwar rechtwinklig zu dieser; und ihre Klappe (13), die in Form einer Hülse aus Elastomermaterial ausgeführt ist, die mit der Spindel (38), die dem Vordruckminderungsventil (10) entgegengesetzt ist, koaxial einstückig ist, abdichtend gleitend in einem Zylinder (40) des Körpers (1) des Druckminderers angebracht ist, wodurch sich das obere Ende (42) der Hülse (13) der Klappe während des Betriebs des Druckminderers abdichtend auf seinem Ventilsitz (14) abstützen kann.

2. Vorrichtung nach Anspruch 1, **dadurch gekennzeichnet, dass** das Ende der Spindel (38) einen Ansatz (38a) umfasst, der in einer zugeordneten Aussparung (10b) des Vordruckminderungsventils (10) befestigt ist.

3. Vorrichtung nach Anspruch 1 oder 2, **dadurch gekennzeichnet, dass** die Hülse (13) der Klappe des Vordruckminderungsventils (12) mindestens eine untere Abdichtwulst (41) in Gleitkontakt in dem Zylinder (40) und eine obere Endwulst (42) der Klappe, die sich abdichtend auf dem Ventilsitz (14) abstützen kann, umfasst.

4. Vorrichtung nach Anspruch 3, **dadurch gekennzeichnet, dass** die Hülse (13) der Klappe zwei untere Wülste (41) umfasst, die im Wesentlichen den gleichen Diameter aufweisen wie der Diameter der oberen Wulst (42).

5. Vorrichtung nach einem der vorhergehenden Ansprüche, **dadurch gekennzeichnet, dass** die Kammer (44) des Führungszylinders (40) der Klappe mit dem erwähnten Innenraum (32) über Mikrodurchgänge in Verbindung steht, die in der Bodenwand (45) des Zylinders (40) eingerichtet sind.

6. Vorrichtung nach Anspruch 5, **dadurch gekennzeichnet, dass** die Bodenwand (45) des Zylinders (40) dünn und porös ist.

7. Vorrichtung nach einem der vorhergehenden Ansprüche, **dadurch gekennzeichnet, dass** das Vordruckminderungsventil (12) eine Feder (43) mit Sicherheitsrand umfasst, die zwischen dem Ende der Ventilspindel (38) gegenüber der dem Ende, das mit der Vordruckminderungsmembran (10) und der Bodenwand (45) des Zylinder (40) gekoppelt ist, vorbelastet angebracht ist.

8. Vorrichtung nach einem der vorhergehenden Ansprüche, **dadurch gekennzeichnet, dass** die Spindel (24) des Druckminderungsventils (21) mit der Druckminderungsmembran (18) über einen Hebel (22) verbunden ist, der drehbar auf einem Trägerstück (47) angebracht ist, das mit dem Körper (1) des Druckminderers einstückig ist, und wobei die Ventilspindel (24) gleitend geführt angebracht ist, wobei sie an ihrem unteren Ende eine entsprechende Klappe (26) trägt, die sich auf dem Sicherheitssitz (31) des Trägerstücks (47) abstützen kann.

9. Vorrichtung nach Anspruch 8, **dadurch gekennzeichnet, dass** der Hebel (22) gelenkig an dem oberen Ende der Ventilspindel (24) und drehbar an dem Trägerstück (47) in einer Gabel (53) dieses Stücks angebracht ist.

10. Vorrichtung nach Anspruch 8 oder 9, **dadurch gekennzeichnet, dass** das Trägerstück (47) aus einem steifen Material hergestellt ist, das einstückig geformt wird, wie etwa Plastik oder Zamak.

11. Vorrichtung nach einem der vorhergehenden Ansprüche, **dadurch gekennzeichnet, dass** die beiden Membranen (10, 18) nebeneinander angeordnet sind, im Wesentlichen in derselben Ebene, und dadurch befestigt sind, dass sie an ihrem Rand jeweils zwischen einer Vertiefung (5, 6) und einer Abdeckung (7, 15), die abnehmbar an der Vertiefung befestigt ist, um die Druck-/Regulierungs- (9/17) und Ausström- (8, 16) Kammern abzugrenzen, eingeschoben sind, wobei die beiden Abdeckungen (7, 15) einteilig hergestellt sind, und ein gemeinsamer Luftkanal (54), der mit den beiden Abdeckungen dazwischen einstückig ist (7, 15), mit den beiden Ausströmkammern (8, 16) durch jeweils zwei Öffnungen (55) der Abdeckungen in Verbindung steht.

12. Vorrichtung nach Anspruch 11, **dadurch gekennzeichnet, dass** die Abdeckung (15) der Druckminderungsstufe, in der die Kalibrierfeder (19) aufgenommen ist, durch eine Gewindekappe (20) geschlossen wird, zum Einstellen der Kalibrierkraft der Feder (19), die in ein Innengewinde (56) eingedreht wird, das mit einem zylindrischen Mantel (57) der Abdeckung eingeformt wird.

13. Vorrichtung nach Anspruch 12, **dadurch gekennzeichnet, dass** das Innengewinde (56) des Mantels der Abdeckung (57) aus einem einzigen spiralförmigen Gewinde besteht.

14. Vorrichtung nach einem der vorhergehenden Ansprüche, **dadurch gekennzeichnet, dass** mindestens eine der Membranen, insbesondere die Vordruckminderungsmembran (10), eine steife Scheibe aus Plastik oder Zamak (10a) umfasst, die in die Membran (10) übergeformt ist.

15. Vorrichtung nach Anspruch 14, **dadurch gekennzeichnet, dass** die steife Scheibe (10a) am oberen Ende der Spindel (38) des Vordruckminderungsventils (12) gekoppelt ist.

16. Vorrichtung nach einem der vorhergehenden Ansprüche, **dadurch gekennzeichnet, dass** der Eingang des Druckminderers einen Schlauch (2) umfasst zum Anschluss an eine Hochdruckquelle, die an einer Eingangsbohrung (1a) des Körpers des Druckminderers durch einen kegelstumpfförmigen Zugentlastungsring (B), der in einer Außennute (2a) des Schlauchs aufgenommen wird, befestigt ist, und dessen kreisförmiger Rand von größerem Durchmesser auf den Eingang des gasförmigen Fluids in den Schlauch (2) gerichtet ist, um zu verhindern, dass dieser aus der Öffnung (2a) herausgezogen wird, indem er in das verformbare Material des Körpers des Druckminderers (1) eindringt.

17. Vorrichtung nach einem der vorhergehenden Ansprüche, **dadurch gekennzeichnet, dass** die Druckminderungsstufe ein Spitzenausgleichventil (23) umfasst, das in der Regulierungskammer (17) aufgenommen wird und ein ringförmiges Schließelement umfasst, das einen Querschnitt aufweist, der als Dichtungslippe (58) geformt ist, die eine Biegewirkung ausübt, einstückig mit der Druckminderungsmembran (18) an ihrer kreisförmigen mittleren Öffnung (18a), und einen Dichtsitz (59), der aus einem Kragen des unteren Teils der Ventilspindel (60) gebildet wird, der mit dem Druckminderungsventil (21) verbunden ist, wobei das Schließelement (58) mindestens von der entsprechenden Kalibrierfeder (19) abstützend auf dem Dichtsitz (59) gehalten wird.
